(19) Europäisches Patentamt
European Patent Office
Office européen des brevets

(11) Veröffentlichungsnummer: **0 354 527 B1**

(12) # EUROPÄISCHE PATENTSCHRIFT

(45) Veröffentlichungstag der Patentschrift: **12.01.94**

(51) Int. Cl.$^5$: **C08G 18/42**, C09J 175/06

(21) Anmeldenummer: **89114633.4**

(22) Anmeldetag: **08.08.89**

(54) **Rasch abbindende, feuchtigkeitshärtende Schmelzklebstoffe und deren Verwendung.**

(30) Priorität: **11.08.88 DE 3827224**

(43) Veröffentlichungstag der Anmeldung:
**14.02.90 Patentblatt 90/07**

(45) Bekanntmachung des Hinweises auf die Patenterteilung:
**12.01.94 Patentblatt 94/02**

(84) Benannte Vertragsstaaten:
**AT BE CH DE ES FR GB IT LI LU NL SE**

(56) Entgegenhaltungen:
**EP-A- 0 219 086**
**FR-A- 1 139 776**
**FR-A- 1 401 926**
**FR-A- 1 478 990**
**FR-A- 2 081 720**

(73) Patentinhaber: **HÜLS AKTIENGESELLSCHAFT**
**D-45764 Marl(DE)**

(72) Erfinder: **Müller, Hartmut, Dr.**
**Siebengebirgsallee 19**
**D-5210 Troisdorf(DE)**
Erfinder: **Brüning, Klaus, Dr.**
**Hauptstrasse 294**
**D-5060 Bergisch Gladbach(DE)**

**EP 0 354 527 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Zur Verbesserung des Scherstandvermögens von Schmelzklebstoffen bei erhöhter Temperatur setzt man reaktive Klebstoffsysteme ein, die entweder durch Energiezufuhr vernetzt werden oder mittels Feuchtigkeit zum unschmelzbaren Klebstoff aushärten.

Reaktive, feuchtigkeitshärtende Schmelzklebstoffe aus der Klasse der isocyanatfunktionellen Polymeren sind aus z.B. der DE-OS 24 01 320, EP-OS 0 107 097 und EP-OS 0 125 009 bekannt. Überwiegend sind die verwendeten Polymere Polyester aus Adipinsäure, Butandiol-1.4 und Hexandiol-1.6.

Aus der Fr-A-1,139 776 und Fr-A-1 401 926 sind Umsetzungsprodukte aus Polyisocyanaten und Polyestern bekannt, die als Schmelzklebstoffe verwendet werden können.

Für viele Anwendung ist es erforderlich, daß die verwendeten reaktiven Schmelzklebstoffe nach der Applikation rasch abbinden, um eine sofortige weitere Verarbeitung zu ermöglichen. Das ist aber mit bekannten Schmelzklebstoffen schwer zu erreichen. Eine verbesserte, d.h. kürzere Abbindegeschwindigkeit erfordert Zusätze, z.B. von Harzen oder thermoplastischen Polymeren. Nach EP-OS 0 232 055 werden flüssige Isocyanat-Präpolymere mit Ethylen/Vinylacetat-Copolymerisaten oder -Methylstyrolharzen, nach EPOS 0 107 097 mit thermoplastischen Polyurethanen oder Kondensationsharzen und nach EP-OS 0 240 473 mit Acrylat-Oligomeren kombiniert. Solche reaktiven Schmelzklebstoffe enthalten nach der Vernetzung durch Luftfeuchtigkeit noch hohe Anteile an thermoplastischen Harzen, welche das Scherstandvermögen bei erhöhter Temperatur nachteilig beeinflussen.

Zwar haben Schmelzklebstoffe nach EP-OS 0 248 658, welche Polyester mit mehr als 50 % aromatischer Dicarbonsäure anstelle von aliphatischer Dicarbonsäure enthalten, eine verbesserte Abbindegeschwindigkeit Solche Produkte besitzen jedoch den Nachteil einer zu hohen Schmelzviskosität, was Probleme bei der Herstellung der Präpolymeren und bei der Verarbeitung der Schmelzklebstoffe mit sich bringt. Zusätzlich wird durch Gehalte aromati scher Dicarbonsäuren die Glasumwandlungstemperatur wesentlich erhöht, was nach Vernetzung zu einer geringeren Elastizität der Verklebung führt.

Es bestand daher die Aufgabe, hochelastische, feuchtigkeitsvernetzende Schmelzklebstoffe zu entwikkeln, die ohne weiteres Zusätze von Polymeren und/oder Harzen ein rasches Abbinden nach der Applikation gewährleisten. Kurze Abbindegeschwindigkeiten von im vorliegenden Fall lösungsmittelfreien, sogenannten reaktiven Hot-Melts ermöglichen dann bei serienmäßiger Fertigung hohe Taktgeschwindigkeit bzw. Lösen der Fixierung nach kurzer Zeit.

Gegenstand der Erfindung sind Schmelzklebstoffe, bestehend aus den Umsetzungsprodukten von Polyisocyanaten und Hydroxypolyestern, wobei die Hydroxypolyester mehr als 50 Gew.-% Hydroxpolyester der Formel

$$HO-[(A)-O-\underset{\underset{O}{\|}}{C}-(B)-\underset{\underset{O}{\|}}{C}-O]_z-(A)-OH \quad (1)$$

enthalten, **dadurch gekennzeichnet**, daß

1) (A) eine (- $CH_2$ -)$_x$-Gruppe ist, wobei diese Gruppe gegebenenfalls bis zu 50 mol % ersetzt ist durch Reste eines Etherdiols,

2) (B) eine (- $CH_2$-)$_y$-Gruppe ist, wobei diese Gruppe gegebenenfalls bis zu 80 mol % ersetzt ist durch aromatische Reste, und wobei der Schmelzpunkt dieser aromatischen Reste enthaltende Hydroxypolyester unter 95° C liegt,

3) Y = 8 bis 12

4) X + Y = 12 bis 26

5) Z = 6 bis 50

und daß

6) das Verhältnis der Umsetzung von OH:NCO von 1:1,2 bis 1:3,0 gewählt ist.

Hydroxypolyester im Sinne der Erfindung haben OH-Zahlen von 5 bis 100, vorzugsweise von 10 bis 50 und Säurezahlen unter 5, vorzugsweise unter 2, möglichst unter 1.

Es ist von entscheidendem Einfluß auf die Abbindegeschwindigkeit, daß aliphatische Dicarbonsäuren mit 8, 10 oder 12 Methylgruppen, d.h. Decandisäure, Dodecandisäure oder Tetradecandisäure enthalten sind, wobei Dodecandisäure sehr bevorzugt ist. Vorzugsweise sollen mindestens 20, sehr bevorzugt mindestens 50 Mol-% der Dicarbonsäuren aus Dodecandisäure bestehen. Z ist vorzugsweise 6 bis 20.

Die Art der aliphatischen Diole ist an sich beliebig, jedoch sind Diole mit 6 bis 18 Methylengruppen bevorzugt. und mit 6 bis 12 Methylgruppen sehr bevorzugt. Werden Dicarbonsäuren ab y = 10 verwendet,

erhält man auch mit kurzkettigen Diolen mit x = 2 oder 4 überraschend kurze Abbindezeiten (vgl. Beisp. 4).

Als Diole können auch Etherdiole, d.h. Oligomere bzw. Polymere z.B. auf Basis Ethylenglykol oder Butandiol-1.4 enthalten sein, obgleich das nicht bevorzugt ist. Soweit Etherdiole anwesend sind, soll ihr Anteil nicht mehr als 50 mol-% der Diole betragen.

Die Summe der Methylengruppen x + y der Polyestereinheit aus Dicarbonsäuren und Diolen soll 12 bis 26 betragen, vorzugsweise gleich oder größer 14.

Die Schmelzklebstoffe gemäß der Erfindung sollen keine der bekannten Zusätze, wie monofunktionelle Verbindungen, d.h Alkanole oder Monamine, weitere Polymere oder Harze o. dgl., enthalten. Besonders monofunktionelle Verbindungen, d.h. Alkanole oder Monamine, sind zu vermeiden.

Gegenstand der Erfindung ist daher auch ein Schmelzklebverfahren mit Schmelzklebstoffen nach den Patentansprüchen 1 bis 8, welche in Abwesenheit von flüchtigen Lösungs- bzw. Verdünnungsmitteln auf dem Substrat bei erhöhter Temperatur appliziert und ohne Wartezeit und ohne Trocknung gebrauchsfertig sind.

Jedoch können Füllstoffe, Katalysatoren, Alterungsschutzmittel und Hilfsstoffe, welche keine Polymeren sind, anwesend sein.

Gegenstand der Erfindung ist auch die Verwendung der Schmelzklebstoffe nach den Ansprüchen 1 bis 7 zum Verkleben gleicher oder unterschiedlicher Substrate, wie Metalle, Glas, Holz, Papier, Keramik, Leder oder Kunststoffe.

Überraschenderweise hat sich gezeigt, daß die Abbindegeschwindigkeit ganz wesentlich steigt, wenn die Auswahl gemäß der Erfindung erfolgt, wobei die Kettenlänge x + y eine entscheidende Rolle spielt sowie in zweiter Linie die Kettenlänge y der aliphatischen Dicarbonsäuren. Gegenüber weiteren Schmelzklebstoffen auf der Basis von aliphatischen Polyestern mit anderer Kettenlänge steigt die Abbindegeschwindigkeit auf optimale Werte im Bereich von 1 bis 5 , sehr bevorzugt 1 bis 3 s. Damit ist die Abbindegeschwindigkeit um das 5- bis 20-fache gestiegen (vgl. Tab. der Beispiele).

Gegenstand der Erfindung sind auch Schmelzklebstoffe, deren Polyester mehr als 50 Gew.-%, ggf. mehr als 75 Gew.-% des Poly esters der Formel 1 und, ergänzend zu 100 Gew.-% beliebige weitere Polyester enthält. Auch bei solchen Polyestergemischen wird die Abbindegeschwindigkeit durch den Anteil der Polyester der Formel 1 wesentlich verkürzt (Beisp. 7, Vergleichsbeisp. 4).

Weitere Gegenstand sind auch Schmelzklebstoffe auf Basis von Polyestern der Formel 1, worin die aliphatischen Dicarbonsäuren bis zu 80, vorzugsweise bis zu 50 Mol-% (von gesamt) durch aromatische Dicarbonsäuren ersetzt sind (Beisp. 6, Vergleichsbeisp. 3). Der Schmelzpunkt (melting point) dieser Mischpolyester mit Anteilen von aromatischen Dicarbonsäuren liegt unter 95° C, vorzugsweise unter 90° C. Eine verkürzte Abbindegeschwindigkeit wird durch den Anteil der langkettigen aliphatischen Polyesterbausteine erreicht. Die aromatischen Dicarbonsäuren erhöhen die Haftkraft auf z.B. Metallen.

Der Umsetzungsgrad der Polyisocyanate ist im üblichen Bereich, d.h. das Verhältnis von Hydroxylgruppen der Polyester zu NCO-Gruppen soll allgemein 1 : 1,2 bis 1 : 3,0, vorzugsweise 1 : 1,5 bis 1 : 2,5 betragen.

Als Polyisocyanate finden sowohl aromatische wie auch aliphatische oder cycloaliphatische Diisocyanate oder höherfunktionelle bzw. polymere Polyisocyanate Verwendung, welche allgemein bekannt sind. Die vorliegenden Schmelzklebstoffe enthalten keine Lösungsmittel, so daß bei Applikation das Abdünsten von Lösungsmitteln in technisch aufwendigen Trockentunneln entfällt. Im allgemeinen erfolgt die Applikation bei Temperaturen von 80 bis 150° C.

Aufgrund der gegenüber bereits bekannten Schmelzklebstoffe sehr raschen Abbindegeschwindigkeit durch schnelles Rekristallisieren in der Klebefuge nach der Aufbringung aus der Schmelze eignen sich die erfindungsgemäßen Klebstoffe bevorzugt für solche Anwendungen, in denen neben einer hohen Elastizität der Verklebung die miteinander verbundenen Substrate einer sofortigen Weiterverarbeitung zugeführt werden sollen. Beispiele für sol che Anwendungen finden sich in der Schuhindustrie, der holverarbeitenden Industrie, der Papierindustrie und der Metallverarbeitung.

**Abbindegeschwindigkeit**

Es ist daher überraschend möglich, die Schmelzklebstoffe mit Gehalten von Umsetzungsprodukten von Polyisocyanaten und Hydroxypolyestern gemäß der Erfindung in einem Schmelzklebeverfahren in Abwesenheit von Lösungs- bzw. Verdünnungsmitteln bei erhöhter Temperatur auf ein flächiges Substrat zu applizieren und ohne eine Trocknung und ohne Wartezeit infolge der sehr schnellen Härtung bzw. Vernetzung durch Luftfeuchtigkeit ohne thermische Trocknung in gebrauchsfertigem Zustand zu erhalten.

Zur Messung der Abbindegeschwindigkeit wird der Schmelzklebstoff aus der 120° C heißen Schmelze auf einen Holzquader mit einer Fläche von 25 x 25 mm dünn aufgetragen und sofort anschließend mit

einem zweiten Holzquader der gleichen Grundfläche gefügt, d.h. zum Verkleben gebracht. Die Abbindezeit gibt an, wie lange die Holzstücke sich mittels kräftigem Fingerdruck noch gegeneinander verschieben lassen. Je geringer die Zeitspanne ist, desto günstiger ist das Abbindeverhalten des Schmelzklebstoffs.

**Beispiele 1 bis 6 und Vergleichsbeispiele 1 bis 3**

In einem Dreihals-Rundkolben werden 1 Mol Polyester entsprechend der Zusammensetzung in Tabelle 1 mit einer Hydroxylzahl von 30 aufgeschmolzen und mittels Vakuum 15 min entgast. Danach werden 2,2 Mol 4,4'-Methylendiphenyldiisocyanat (MDI) zugegeben und homogenisiert. Zur vollständigen Umsetzung der Reaktionspartner wird bei 120° C 2 Std. unter Ausschluß von Feuchtigkeit gerührt. Die Umsetzung wird mittels Bestimmung des NCO-Werte kontrolliert. Dieser liegt nach der Umsetzung bei 2 Gew.-%.

**Tabelle 1:** Zusammensetzung der Basispolyester und deren Eigenschaften nach Umsetzung mit MDI im Verhältnis OH/NCO = 1/2,2

| Beispiele Nr. | Zusammensetzung TPS | AD | DS | DDS | MEG | BD | HD | ND | $\sum(CH_2)$ | Abbindezeit s | Fp. (°C) | $V_{130}$ (Pa.s) |
|---|---|---|---|---|---|---|---|---|---|---|---|---|
| Vergleichsbeispiel 1 | | 100 | | | | 100 | | | 8 | 20 | 62 | 17 |
| Vergleichsbeispiel 2 | | 100 | | | | | 100 | | 10 | 15 | 65 | 9 |
| Beispiel 1 | | 100 | | | | | | 100 | 13 | 10 | 68 | 20 |
| Beispiel 2 | | | 100 | | | | 100 | | 14 | 3 | 68 | 9 |
| Beispiel 3 | | | | 100 | | | 100 | | 16 | 1 | 74 | 11 |
| Beispiel 4 | | | | 100 | 100 | | | | 12 | 2 | 88 | 7 |
| Beispiel 5 | | 50 | | 50 | | | 100 | | 13 | 10 | 58 | 13 |
| Vergleichsbeispiel 3 | 60 | 40 | | | | | 100 | | 7,6 | 40 | 96 | 50 |
| Beispiel 6 | 40 | | | 60 | | | 100 | | 12 | 20 | 88 | 42 |

TPS = Terephthalsäure
AD = Adipinsäure
DS = Decandisäure
DDS = Dodecandisäure
MEG = Monoethylenglykol
BD = Butandiol-1.4
HD = Hexandiol-1.6
ND = Nonandiol-1.9

$\sum(CH_2)$ = Summe der Methylengruppen pro Polyestereinheit der Formel (1)
Fp. = Fließpunkt (Ring und Kugel) nach DIN 52 011
$V_{130}$ = Schmelzviskosität bei 130° C (Brookfield)

Vergleicht man in Tabelle 1 die Beispiele 1 bis 5 mit den Vergleichsbeispielen 1 und 2, so nimmt mit höherer Anzahl an Methylengruppen pro Polyestereinheit die Abbindegeschwindigkeit sehr stark ab. Besonders auffallend sind die sehr kurzen Abbindezeiten für Polyester, die mindestens 12 Methylengruppen pro Polyestereinheit enthalten.

Auch beim Vergleich von Polyestern, die aromatische Dicarbonsäuren enthalten, wird durch den Ersatz der Adipinsäure durch längerkettige Dicarbonsäuren die Abbindegeschwindigkeit verringert (Vergleichsbeisp. 3, Beisp. 6).

**Vergleichsbeispiel 4**

Der Polyester aus Vergleichsbeispiel 1 wird mit einem Polyester der Zusammensetzung Terephthalsäure : Isophthalsäure : Adipinsäure = 50 : 40 : 10 und Monoethylenglykol : Neopenthylglykol = 50 : 50 (OHZ = 30) in einem Gewichtsverhältnis von 8 : 2 gemischt und mit MDI im Verhältnis OH/NCO = 1/2,2 zu einem reaktiven Schmelzklebstoff umgesetzt. Die Abbindezeit dieses Schmelzklebstoffs beträgt 50 s.

**Beispiel 7**

Ersetzt man im Vergleichsbeispiel 4 den Polyester aus Vergleichsbeispiel 1 durch einen Polyester aus Beispiel 3, so erhält man ein Produkt mit einer wesentlich kürzeren Abbindezeit von 2 s.

**Beispiel 8 und 9**

Analog Beispiel 3 wird 1 Mol Polyester mit 1,5 Mol MDI umgesetzt. Der NCO-Gehalt nach der Umsetzung liegt bei 1,0 Gew.-% (Beispiel 8). Bei Umsetzung von 1 Mol Polyester mit 2,5 Mol MDI liegt der NCO-Gehalt nach Umsetzung bei 2,7 Gew.-% (Beispiel 9).

**Beispiele 10 und 11**

Beispiel 3 wird wiederholt, jedoch wird im Polyester Hexandiol
a) zu 20 Mol-% durch Polybutylenglykol ($M_w$ = 650) (Beispiel 10), b) zu 15 Mol-% durch Triethylenglykol (Beispiel 11) ersetzt. Die Abbindegeschwindigkeiten der Umsetzungsprodukte liegen bei 3 s.

**Patentansprüche**

1. Schmelzklebstoffe, bestehend aus den Umsetzungsprodukten von Polyisocyanaten und Hydroxypolyestern, wobei die Hydroxypolyester mehr als 50 Gew.-% Hydroxypolyester der Formel

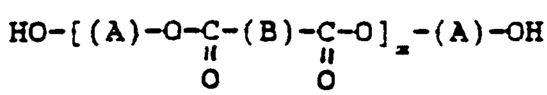 (1)

enthalten, **dadurch gekennzeichnet**, daß
1) (A) eine (- $CH_2$ -$)_x$-Gruppe ist, wobei diese Gruppe gegebenenfalls bis zu 50 mol % ersetzt ist durch Reste eines Etherdiols,
2) (B) eine (- $CH_2$-$)_y$-Gruppe ist, wobei diese Gruppe gegebenenfalls bis zu 80 mol % ersetzt ist durch aromatische Reste, und wobei der Schmelzpunkt dieser aromatischen Reste enthaltende Hydroxypolyester unter 95° C liegt,
3) Y = 8 bis 12
4) X+Y = 12 bis 26
5) Z = 6 bis 50
und daß
6) das Verhältnis der Umsetzung von OH:NCO von 1:1,2 bis 1:3,0 gewählt ist.

2. Klebstoffe nach Anspruch 1, **dadurch gekennzeichnet**, daß die Hydroxypolyester mehr als 75 Gew.-% Hydroxypolyester der Formel (1) enthalten.

3. Schmelzklebstoffe nach Anspruch 1 oder 2, **dadurch gekennzeichnet**, daß das Verhältnis der Umsetzung von OH:NCO von 1:1,5 bis 1:2,5 gewählt ist.

4. Schmelzklebstoffe nach den Ansprüchen 1,2 oder 3, **dadurch gekennzeichnet**, daß die (-$CH_2$-$)_y$-Gruppe bis zu 50 mol% ersetzt ist durch aromatische Reste.

**5.** Schmelzklebstoff nach Anspruch 1 bis 4, worin x + y gleich oder größer 14 ist.

**6.** Schmelzklebstoff nach einem der Ansprüche 1 bis 5, worin x = 6 bis 18 ist.

**7.** Schmelzklebstoff nach mindestens einem der vorangehenden Ansprüche, die zusätzlich Füllstoffe, Katalysatoren, Alterungsschutzmittel oder andere Hilfsstoffe enthalten.

**8.** Verwendung von Schmelzklebstoffen nach mindestens einem der vorangehenden Ansprüche zum Verkleben gleicher oder unterschiedlicher Substrate, wie Metalle, Glas, Holz, Papier, Keramik, Leder oder Kunststoffe.

**9.** Schmelzklebverfahren **dadurch gekennzeichnet**, daß Schmelzklebstoffe mit Gehalten von Umsetzungsprodukten von Polyisocyanaten und Hydroxypolyestern nach einem der Ansprüche 1 bis 8 in Abwesenheit von flüchtigen Lösungs- bzw. Verdünnungsmitteln auf ein Substrat bei erhöhter Temperatur appliziert und ohne Wartezeit und ohne Trocknung gebrauchsfertig sind.

## Claims

**1.** Melt adhesives consisting of the reaction products of polyisocyanates and hydroxypolyesters, wherein the hydroxypolyesters contain more than 50% by weight of hydroxypolyesters of the formula

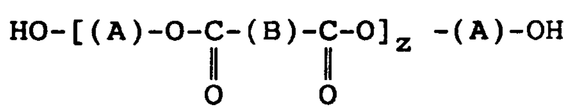

(1)

characterised in that

1) (A) is a $(-CH_2-)_x$ - group wherein this group is optionally replaced to up to 50 mol percent by residues of an ether diol,

2) (B) is a $(-CH_2-)_y$ - group wherein this group is optionally replaced to up to 80 mol percent by aromatic residues and wherein the melting point of this hydroxypolyester containing aromatic residues is below 95°C.

3) Y = 8 to 12

4) X + Y = 12 to 26

5) Z = 6 to 50

and that

6) the ratio for the reaction of OH:NCO is chosen to be 1:1.2 to 1:3.0.

**2.** Adhesives according to Claim 1, characterised in that the hydroxypolyesters contain more than 75% by weight of hydroxypolyesters of the formula (I).

**3.** Melt adhesives according to Claim 1 or 2, characterised in that the ratio for the reaction of OH:NCO is chosen from 1:1.5 to 1:2.5.

**4.** Melt adhesives according to Claims 1, 2 or 3, characterised in that the $(-CH_2-)_y$ group is replaced to up to 50 mol - % by aromatic residues.

**5.** Melt adhesive according to Claims 1 to 4, wherein x + y is equal to or greater than 14.

**6.** Melt adhesive according to one of Claims 1 to 5, wherein x = 6 to 18.

**7.** Melt adhesive according to at least one of the foregoing claims, which contains additionally fillers, catalysts, anti-aging agents or other auxiliaries.

**8.** Use of melt adhesives according to at least one of the foregoing claims for bonding of like or different substrates such as metals, glass, wood, paper, ceramic, leather or plastics.

**9.** Melt bonding process, characterised in that melt adhesives with contents of reaction products of polyisocyanates and hydroxypolyesters according to one of claims 1 to 8 are applied in the absence of volatile solvent or diluent to a substrate at elevated temperature and are ready for use without a waiting time and without drying.

## Revendications

**1.** Colles fusibles, consistant en produits de réaction de polyisocyanates et d'hydroxypolyesters, les hydroxypolyesteres contenant plus de 50 % en poids d'un hydroxypolyester de formule

$$HO-[(A)-O-\underset{O}{C}-(B)-\underset{O}{C}-O]_{z'}-(A)-OH \qquad (1)$$

colles fusibles caractérisées en ce que :

1) (A) représente un groupe $(-CH_2-)_{x'}$ ce groupe pouvant être remplacé éventuellement jusqu'à 50 moles % par des restes d'un éther diol,

2) (B) représente un groupe $(-CH_2-)_{y'}$ ce groupe pouvant être remplacé jusqu'à 80 moles % par des restes aromatiques, et le point de fusion de ces hydroxypolyesters contenant des restes aromatiques se situant au-dessous de 95 °C,

3) x vaut 8 à 12,

4) la somme (x + y) vaut de 12 à 26,

5) z vaut de 6 à 50,

et en ce que :

6) le rapport de réaction entre les groupes OH et NCO est choisi de 1:1,2 à 1:3,0.

**2.** Colles selon la revendication 1, caractérisées en ce que les hydroxypolyesters contiennent plus de 75 % en poids d'un hydroxypolyester de formule (1).

**3.** Colles fusibles selon la revendication 1 ou 2 , caractérisées en ce que le rapport de réaction entre les groupes OH/NCO est choisi de 1:1,5 à 1:2,5.

**4.** Colles fusibles selon les revendications 1, 2 ou 3, caractérisées en ce que le groupe $(-CH_2-)_y$ est remplacé pour jusqu'à 50 moles % par des restes aromatiques.

**5.** Colle fusible selon les revendications 1 à 4, dans le cas de laquelle la somme (x + y) est égale ou supérieure à 14.

**6.** Colle fusible selon l'une des revendications 1 à 5, dans laquelle x vaut de 6 à 18.

**7.** Colles fusibles selon l'une au moins des revendications précédentes, qui contiennent en outre des charges, des catalyseurs, des agents de protection contre le vieillissement ou d'autres adjuvants.

**8.** Utilisation de colles fusibles selon l'une au moins des revendications précédentes, pour coller des substrats identiques ou différents, comme des métaux, du verre, du bois, du papier, de la matière céramique, du cuir ou des matières plastiques.

**9.** Procédé de collage à l'aide de colles fusibles, caractérisé en ce qu'on applique des colles fusibles contenant des produits de réaction de polyisocyanates et d'hydroxypolyesters selon l'une des revendications 1 à 8, en l'absence de solvants ou de diluants volatils, sur un substrat à température élevée, ces colles étant prêtes à l'emploi sans temps intermédiaire d'attente et sans séchage.